# FASCICULE DE BREVET EUROPEEN

(11) **EP 1 299 759 B1**
(45) Date de publication et mention de la délivrance du brevet: **13.09.2006**
(21) Numéro de dépôt: 01954092.1
(22) Date de dépôt: 12.07.2001
(51) Int. Cl.: G02B 6/44

(54) **BOITIER DE RACCORDEMENT DE FIBRES OPTIQUES A DES POSTES DE TRAVAIL, POUR IMMEUBLES**
IN GEBÄUDEN ANZUWENDENDES GEHÄUSE ZUR VERBINDUNG ZWISCHEN OPTISCHEN FASERN UND ARBEITSPLÄTZEN
BOX FOR CONNECTING OPTICAL FIBRES TO WORKSTATIONS, FOR BUILDINGS

(30) Priorité: 13.07.2000 FR 0009262
(43) Date de publication de la demande: 09.04.2003
(73) Titulaire: FRANCE TELECOM, 75015 Paris (FR)
(72) Inventeur: CRESPEL, Daniel, 22300 Lannion (FR); PERRIN, Gabrielle, F-22300 Ploubezre (FR)
(74) Mandataire: Bentz, Jean-Paul
(86) Numéro de dépôt international: PCT/FR2001/002280
(87) Numéro de publication internationale: WO 2002/006879

(56) Documents cités:
- EP-A- 0 690 325
- WO-A-96/25680
- DE-A- 3 841 607
- FR-A- 2 750 220
- US-A- 5 434 944

## Description

L'invention concerne un boîtier de raccordement de fibres optiques ou câbles de fibres optiques à proximité des postes de travail, pour immeubles.

Le raccordement de la fibre avec une prise ou un connecteur nécessite un environnement qui se nomme généralement boîte ou boîtier.

La plupart des agencements des boîtes de jonction optique sont dérivées de la technique de raccordement de prises de type câble de cuivre permettant ainsi une continuité industrielle. Les boîtes assurent une fonction de maintien de la prise sur son support ou réceptacle. Celui ci est de forme prismatique. Les embases de connecteur sont fixées sur la plaque support. L'ensemble est démontable et permet une évolution et un accès à l'arrière de la prise par le démontage du couvercle, un système de cache permet la protection du contenu. Le lovage du câble est permis à l'intérieur du réceptacle à l'identique du câble de cuivre prévu dans cet environnement de boîtier. Un système de couvercle sur le support protège l'embase du connecteur. Celui-ci est donc accessible sur la façade.

L'inconvénient majeur est que tous ces produits industriels sont constitués de multiples éléments qui se superposent ou exploitent les techniques utilisées dans l'environnement d'un câblage cuivre sans tenir compte des spécificité des fibres optiques.

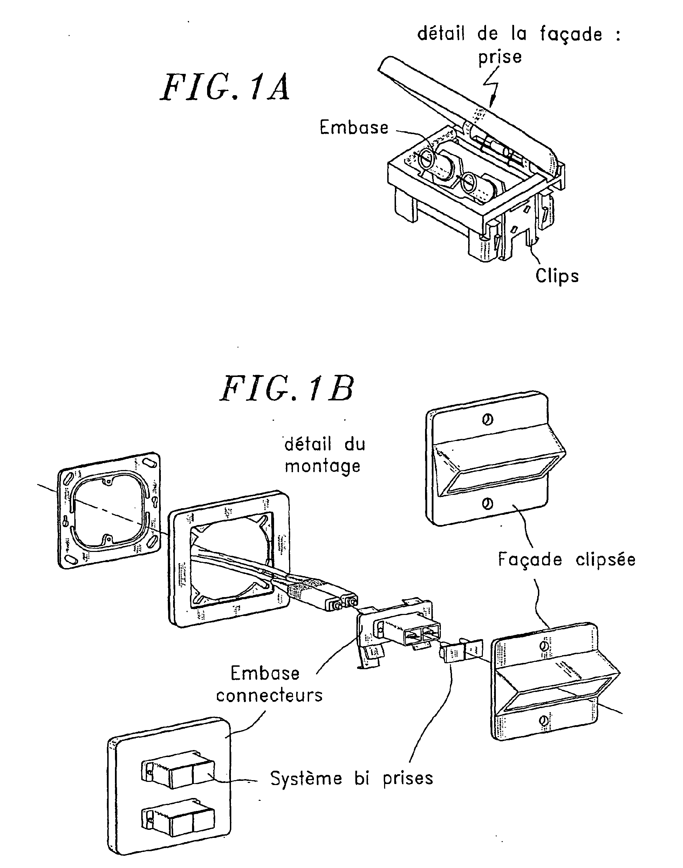

La figure 1 représente ce contexte et les techniques qui intègrent les contraintes de l'optique.

Le connecteur optique et son embase sont mis en lieu et place d'une prise de type data ou RJ45. Cette approche de ré-exploitation de l'existant est économiquement intéressante mais génère les inconvénients suivants pour le raccordement optique :

L'embase optique est fixée sur des éléments démontables disposés sur la face avant du boîtier ou de la boîte de raccordement. Tous ces efforts liés à la connexion ou à la déconnexion ainsi que les charges des câbles sortants sont concentrés sur une plaque amovible et fragile. La tenue mécanique d'un câble optique et de ces raccords ainsi que les conséquences sur la liaison, ne sont pas pris en compte dans cette adaptation pour l'optique.

Les embases sont fixées dans des cavités par vis ou par clips sur une plaque clipsée sur la façade qui est aussi clipsée sur le boîtier. Il y a donc un empilage de pièces qui ne facilite pas la mise en oeuvre et dans certains cas rend la ré-intervention difficiles ou à risque pour les fibres.

Il est nécessaire de retirer cet empilage de plaques pour avoir accès à l'intérieur de la boîte ou aux connecteurs qui sont situés derrière ces plaques et associé au couvercle. L'ensemble ne facilite pas l'ergonomie du raccordement des prises surtout lors d'un raccordement à posteriori (figure 1B).

Le retrait d'un connecteur de son embase lorsqu'il est dégagé du boîtier génère des risques pour les fibres connexes pouvant se traduire par des atténuations ou dans certains cas la rupture des fibres raccordées. La remise en boîte après intervention est très aléatoire et délicate. Elle est considérée comme l'opération inverse du retrait de connecteur.

Il n'y a aucun dispositif d'ancrage avec le boîtier. Toutes les fibres sont libérées et stockées dans la boîte sans fixation du câble. Celui ci peut être soumis à des efforts de tirage ou de poussage qui vont générer sur les fibres des risques de rupture ou d'atténuation.

Les techniques antérieures sont des boîtier volumineux lorsqu'une zone de lovage existe car celle ci est une cassette de lovage encombrante.

De plus dans ce volume, on cherche à stocker une surlongueur de câble. L'encombrement du câble en cohabitation avec les fibres engendre les inconvénients précisés sur la fibre.

La boîte est d'un volume important et de très forte épaisseur ce qui impose un choix de goulottes en unicité d'épaisseur. Ce choix n'est pas justifié et ne permet pas toutes les intégrations dans les locaux.

Le document US 5 434 944 divulgue un boîtier à trois niveaux où de connecteurs avec leur embase de réception sont disposés sur le niveau supérieur.

La présente invention a pour but de résoudre ces problèmes. Elle a plus particulièrement pour objet un boîtier de raccordement de fibres optiques en immeubles comprenant au moins un fond, principalement caractérisé en ce que le fond comprend au moins une protubérance cylindrique et en demi-lune, aptes à recevoir au moins un tube ou un ensemble formé par l'extrémité d'un câble de fibres optiques ou de modules de fibres optiques avec leurs connecteurs, ledit fond comprenant des embases pour les connecteurs, chacun des éléments de cet ensemble reposant sur le fond du boîtier.

Selon une autre caractéristique, le fond comprend une zone d'ancrage d'un câble de fibres optiques, une zone de lovage, une zone de connectique interne, une zone de réception des embases des connecteurs.

Selon une autre caractéristique le fond du boîtier comprend une zone pour des épissures.

La zone de lovage est constituée par au moins une protubérance cylindrique et au moins une protubérance en demi-lune permettant de ranger les sur longueurs de fibres.

Selon une autre caractéristique, la zone de réception des embases est constituée par une bordure avant du boîtier, ladite bordure comprenant des logements ayant une forme de créneaux alignés, chaque créneau étant apte à recevoir une ou plusieurs embases superposées de connecteurs.

Avantageusement, la zone d'ancrage d'un câble à fibres optique comprend une pièce amovible comprenant une rainure pour le passage du câble et ayant une forme adaptée de manière à être encastrée dans une ouverture pratiquée dans la bordure du boîtier opposée à celle qui comporte les logements pour les embases des connecteurs.

La pièce amovible d'ancrage est déformable ce qui permet de serrer un câble, un module optique ou un tube.

Selon une variante de réalisation, le boîtier comporte une articulation lui permettant de pivoter autour d'un axe d'empilement de boîtiers similaires.

Selon un deuxième mode de réalisation, le boîtier comporte deux fonds rattachés l'un à l'autre et surmontés chacun de leur couvercle

Les deux fonds sont rattachés par une plaque support commune.

Selon une autre caractéristique, le fond à une épaisseur procurant un espace pour deux ensembles chacun comprenant l'extrémité d'un câble de fibres optiques ou d'un module de fibres optiques, les fibres, leurs connecteurs, et les embases pour ces connecteurs ; ces deux ensembles étant superposés.

L'invention a également pour objet un procédé de câblage d'immeubles pour le raccordement de postes de travail, principalement caractérisé en ce qu'il consiste à raccorder un câble de fibres optiques arrivant dans un immeuble pour desservir des postes de travail installés à proximité du passage du câble, à un ou plusieurs boîtiers selon l'une quelconque des revendications précédentes.

Selon un mode de câblage, il consiste à raccorder l'extrémité de chaque câble d'un ensemble de câbles arborescents de l'immeuble à un boîtier.

Selon un autre mode de câblage, il consiste à raccorder l'extrémité de chaque câble d'un deuxième ensemble de câbles arborescents de l'immeuble destiné à doubler le premier ensemble à un boîtier à proximité du boîtier correspondant du premier ensemble.

Selon un troisième mode de câblage, il consiste à faire circuler un câble dans un immeuble et à raccorder des modules de fibres optiques de ce câble par piquage à des boîtiers desservant des postes de travail distincts disposés en divers points de la section des câbles ou le long du câble.

D'autres particularités et avantages de l'invention apparaîtront clairement à la lecture de la description qui est faite ci-après et qui est donnée à titre illustratif et non limitatif en regard des dessins annexés sur lesquels :
- Les figures 1A et 1B, représentent des boîtiers selon l'état de la technique,
- la figure 2A, représente le schéma d'un boîtier fermé,
- la figure 2B, représente le schéma d'un boîtier ouvert selon l'invention,
- les figures 2C, 2D, 2E, illustrent un boîtier selon l'invention installé à proximité d'une goulotte et ancrage d'un câble passant dans cette goulotte,
- les figures 3A et 3B, illustrent un boîtier selon l'invention exploité sur un câble en passage dans la goulotte pour le piquage d'un module de 8 fibres optiques,
- la figure 4, illustre l'ancrage d'un câble dans le boîtier,
- la figure 5, illustre une variante de réalisation du boîtier,
- la figure 6, illustre une autre variante de réalisation,
- les figures 7A et 7B, correspondent au boîtier assemblé de la version éclatée de la figure 6.
- La figure 7C, représente le boîtier fermé de la figure 6,
- La figure 8A, illustre une variante de réalisation du boîtier,
- La figure 8B représente un assemblage de plusieurs boîtier,

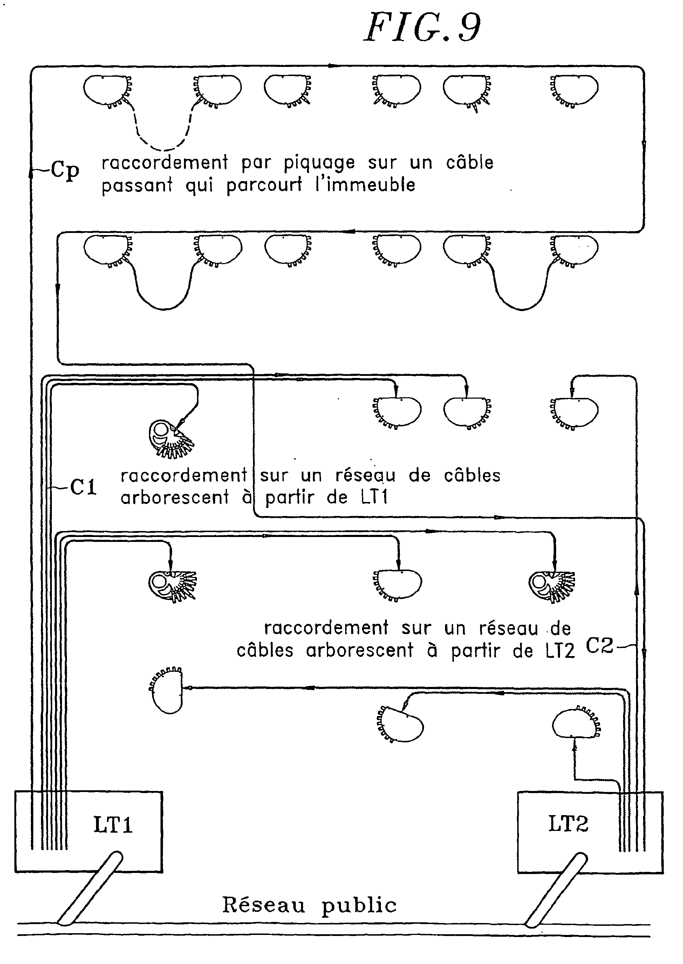

- La figure 9, des exemples de câblage d'immeubles pour le raccordement de postes de travail.

Le but principal de l'invention est de fournir un environnement de prises optiques qui tienne compte des spécificités des fibres et des câbles et qui permette la réalisation du raccordement sur tous types de câblage sans les inconvénients des techniques antérieures, qui va être décrit dans la suite, présente en outre les avantages suivants :
- Permettre le traitement dans le même volume de 2 à 8 fibres ou une variante à 16 fibres.
- Disposer d'une surface de lovage de fibre suffisamment accessible pour permettre la réintervention et l'organisation des surlongueurs nécessaires au raccordement.
- Intégrer les tubes, intégrer le traitement des micro câbles issus d'un mini tube
- Faciliter l'ergonomie du raccordement et accepter la diversité des embases de connecteurs sans apport d'éléments externes.
- Permettre la mise en place des embases de connecteurs sans outillage spécifique.
- Limiter le nombre de pièces nécessaires à la construction du volume de raccordement.
- Dissocier la fonction conditionnement de l'optique des parties démontables ou mobiles.
- Simplifier le montage de l'extrémité des fibres par un traitement individualisé et sans risque pour les fibres collatérales.
- Boîtier de raccordement de moindre coût assurant toutes les variantes d'environnements de fibres munies de leurs connecteurs, de grande densité par exemple les zone de brassage ou de répartiteur.
- Générer des évolutions par l'intégration de coupleur ou d'épissure sans modification du volume.
- Respecter les spécificités de la fibre en particulier les rayons de courbure et l'utilisation du concept fibre nue dans le boîtier.
- Assurer l'ancrage des câbles ou des tubes pour limiter les contraintes sur les fibres et permettre une liaison câble-prise.
- Intégrer par un « design » acceptable l'environnement de bureau en association avec les goulottes de câbles déjà utilisées dans le domaine.
- Organiser les sorties de câbles et placer les connecteurs de manière à limiter l'espace occupé par ceux-ci dans le local et les câbles en sortie.
- Limiter le volume de boîtier par une optimisation associée à un nombre de connexions maximum.
- Créer ou générer des configurations de réseaux par des variantes d'utilisation

Les connecteurs sont placés en opposition dans ces variantes. Ils permettent par des jarretières ou cordons courts à double connecteurs d'assurer une continuité du câble pour la mesure, la réaffectation d'une ou plusieurs fibres ou le bouclage sur les extrémités de fibres.
- Assurer des alternatives ou prospectives techniques comme le piquage ou la réalisation de réseau ou bus. Une fibre rentre dans un système et ressort pour être en continuité vers un autre système : situation de bus optique.
- Eviter les effets de gamme. En effet, une variante décrite dans la suite permet de traiter tous les cas de raccordement. Dans cette variante, seuls deux boîtiers réalisés en miroir permettent d'envisager toutes les situations y compris le piquage et le bus optique.
- Faciliter la mise en oeuvre de variantes de connecteurs y compris satisfaire aux situations mixtes, optique et cuivre, qui arrivent dans le même local par intégration dans le boîtier de ces variantes sans modification compliquée.
- Satisfaire aux situations de raccordement nomade ou prise optique multiple à l'identique des nourrices électriques.
- Assurer le raccordement optique sans formation particulière de manière à banaliser l'optique et le coût de l'opération.
- Développer des procédés de raccordements optiques par piquage sur câble passant afin d'optimiser et de réduire les coûts d'un réseau en immeuble ou en campus.
- Réaliser un produit industriel de très bas cout utilisable dans diverses utilisations.

Les moyens principaux qui permettent d'obtenir ces résultats sont présentés dans la suite à travers plusieurs modes de réalisation d'un boîtier de raccordement intégrant plusieurs fonctionnalités. Ce boîtier permet de traiter toutes les situations de raccordement immeuble à proximité d'un poste de travail comme cela sera détaillé.

Les solutions proposées dans la suite permettent de traiter les points suivants :
a) Les sorties de câbles
b) Le maintien des connecteurs.
c) Le lovage des fibres (associé à l'ergonomie de raccordement).
d) L'ancrage des câbles, des tubes ou des modules.

En outre, l'invention porte sur un procédé de câblage en immeuble à partir du boîtier proposé avec ses différentes variantes.

### a) les sorties de câbles

Comme on le verra dans la suite, les sorties sont opposables suivant le boîtier choisi. En effet, un mode de réalisation propose un montage en miroir avec une sortie de câbles connectés à droite et boîtier miroir avec sortie de câbles connectés à gauche. Cette configuration permet d'adapter les sorties à l'environnement. Ces boîtiers sont en miroir (figures 7A-7C).

Tous les câbles issus de ce boîtier sont placés en éventail le long du mur ce qui permet le rangement et l'organisation du local. Ces sorties sur le même plan facilitent la réalisation d'un boîtier plat qui intègre toutes les fonctions a, b, c, d.

Les sorties de câbles ne sont pas associées au couvercle. Celui-ci a une fonction de protection. Il est indépendant du contenu et des fonctionnalités caractérisés en a, b, c, d. Il recouvre l'ensemble et peut être retiré pour l'accès aux fonctionnalités. Le couvercle peut recevoir toute peinture ou logo; l'intégration au local est ainsi facilitée puisque les sorties de câbles ne sont pas associées au couvercle.

### b) Le maintien des connecteurs

Des cavités reçoivent par encochage individuel des embases de connecteurs sans fixation par clips ou outils spécifiques.

Ces cavités ou encoches sont disposées sur un secteur de cercle de manière à assurer un effet d'éventail favorable à la préhension des connecteurs externes qui sont équipées de gaines.

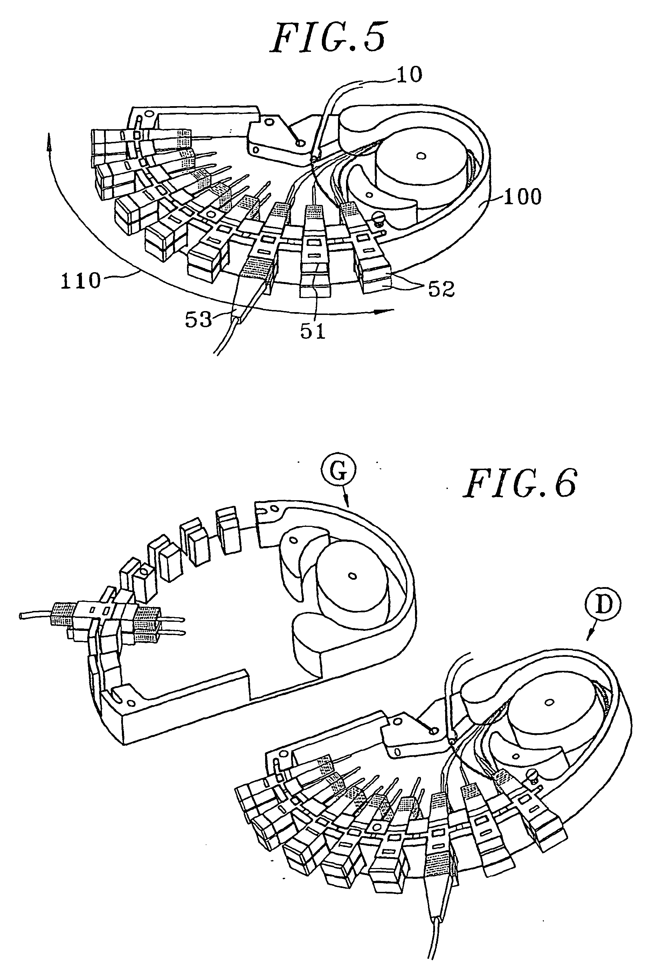

Tous les connecteurs sont disposés sur un secteur d'un demi-périmètre de manière à faciliter la préhension et à limiter l'encombrement. Ce secteur caractérise la sortie des connecteurs, il est envisagé d'augmenter la capacité du boîtier en superposant 2 embases sans modifier la surface (figure 5).

Les connecteurs optiques internes sont montés suivant le concept de fibre nue ; la fiche est identique au connecteur externe.

Ainsi, on dispose d'un boîtier de faible volume avec une surface qui respecte les contraintes des fibres. Le boîtier est de forme demi-cylindrique caractéristique ; elle est en rupture avec l'existant par un maintien des connecteurs. Ce boîtier est issu d'une recherche de fonctionnalité liée à la gestion et à l'organisation des fibres, à la sortie des connecteurs et au maintien de ceux-ci dans le boîtier.

### c) Le lovage des fibres

Une surface de lovage composée d'un cylindre et d'un arc en demi-lune permet une gestion de la surlongueur avec des parcours différents. Le technicien peut choisir un chemin court ou long pour gérer les fibres issues du câble et disposer ainsi de surlongueur.

Des éléments souples, languettes ou masques disposés au-dessus des cylindres ou arcs de lovage, contiennent les fibres dans les chemins de lovage. Ce moyen de conditionnement des fibres est nécessaire pour les maintenir les fibres qui ont un effet de mémoire à la sortie du câble ou par exemple les fibres gainées de 900 :m qu'il est nécessaire de conditionner.

Ces masques sont transparents de manière à faciliter le repérage des fibres lovées.

Les fibres issues de ce lovage sont à une distance égale des connecteurs. La sortie est sensiblement dans l'axe du rayon des embases. Les fibres ont la même origine que le câble et la même zone de lovage.

### cbis) Le lovage des fibres avec épissures ou avec coupleurs

Il est possible avec le boîtier de l'invention de conditionner des épissures de fibres réalisées dans le cas de fibres « préconnectorisées » ou connecteurs "pig tail".

Il est tout à fait possible de ranger ces épissures dans la surface de lovage de part et d'autre du cylindre ou de l'arc. Une augmentation de la surface ou du nombre de cylindres de lovage permet d'intégrer ces épissures ou ces coupleurs.

Les moyens d'assurer un raccordement optique sur une prise est lié à l'ergonomie de la mise en oeuvre des connecteurs en extrémité des fibres et du lovage. Celui-ci est organisé pour permettre l'intervention ou la réintervention. Une surlongueur de fibre est nécessaire dans les deux cas.

La zone de maintien des connecteurs est dissociée de la zone de lovage.

### d) L'ancrage des câbles

Un système d'ancrage fixe l'extrémité du câble ou du tube.

L'ancrage est considéré comme un moyen caractéristique qui respecte les spécifications et garantit des actions de tirage ou de poussage du câble dans la zone de lovage.

L'ancrage est intégré au boîtier, il assure la continuité du câble et solidarise le boîtier avec le câble.

Cet ancrage ou amarrage se caractérise par un élément qui épouse la forme du boîtier. Cet ancrage peut être mis sur le boîtier et sur le boîtier en miroir par retournement.

Ce dispositif d'ancrage permet la tenue mécanique d'un câble, d'un tube ou de porteurs de câbles. Ces éléments sont serrés par une pièce déformable sous l'action d'une vis sans collier ou autres éléments rapportés.

Le boîtier et ses différents modes de réalisation intègre toutes les fonctionnalités qui viennent d'être décrites.

Les deux modes de réalisation, boîtier et boîtier miroir, peuvent être déclinés dans une diversité de configurations de raccordement de câble en immeuble.

Trois traitements de câbles à fibres optiques peuvent être envisagés :
E1 - Extrémité de câble posé en goulotte.
E2 - Piquage sur un câble posé en goulotte.
E3 - Extrémité de câble hors goulotte.

### E1 - l'extrémité de câble posé en goulotte

Le câble est librement posé dans la goulotte. Il arrive de la gaine technique et sort dans le local ou à proximité du poste de travail.

Le boîtier est placé sous la goulotte suivant l'environnement. Un boîtier avec sortie à gauche ou à droite sera utilisé.

La sortie des connecteurs est réalisée le long du mur. Elle n'est pas liée à l'origine du câble dans la goulotte. Le boîtier assure la fonction de traitement des fibres et gère la connectique.

Dans le cas d'un micro câble posé dans un mini tube, on notera que ces tubes utilisent le même parcours qu'un câble et le traitement des fibres sera identique dans le boîtier.

L'extrémité du tube est amarrée comme une gaine de câble puis le micro-câble est dénudé de manière à raccorder les fibres.

Il n'y a aucune différence pour la mise en oeuvre entre un câble ou un câble tubé.

Il y a une analogie de raccordement et une unicité de boîtier.

### E2 - Le piquage sur un câble posé en goulotte

On peut dans l'état des câbles unitubulaires et de la maîtrise d'outillage spécifique ouvrir le câble sur une longueur de 120 cm. Cette découpe permet l'accès aux fibres par la mise en place d'écarteurs qui sont caractérisés par des éléments en polymère placés entre les deux gaines de manière à assurer l'écartement. La structure du câble est conservée dans la zone de piquage. Tous les modules de fibres sont accessibles dans la zone d'ouverture.

Un boîtier est alors placé de part et d'autre de cette ouverture. Ceux-ci sont en miroir.

Un repérage des fibres par code de couleur associé à un repérage des modules permet d'identifier les fibres à dériver.

Dans ce cas, le câble est de grande contenance. Il parcourt divers étages et dessert plusieurs postes de travail ou équipements.

Le câblage se réalise de la façon suivante:
- Un module de fibres est dérivé dans un local (il peut être de 2, 4; 6, 8, 12 fibres).
- Pour réaliser la dérivation du module choisi, les fibres sont coupées dans la partie médiane de la zone d'ouverture du câble.
- Les fibres sont donc dérivées sur le boîtier de gauche et sur le boîtier de droite, ce qui a pour résultat un accès sur câble passant par deux prises situées dans la proximité du poste de travail. Ce poste est donc sécurisé ou sécurisable sur un câble en boucle.

De plus, il est possible d'assurer la continuité des fibres avec un cordon munis de connecteurs placés entre deux prises. Cette fonctionnalité permet la réaffectation et un brassage d'extrémité des fibres.

Ainsi, la goulotte sert au conditionnement du piquage et le boîtier est utilisé pour la connexion.

Cette variante d'utilisation est favorable à la description de nouveaux câblages d'immeuble.

L'opération de piquage ne nécessite pas de boîtier spécifique; c'est le conditionnement du câble et sa protection dans la goulotte qui permet d'obtenir ce résultat.

### E3 - L'extrémité de câble hors goulotte :

Cette variante hors goulotte représente un boîtier positionné en extrémité d'un câble nomade. Cette configuration est à envisager pour tout câble rallonge ou pour un câble dont l'extrémité est exploitée sans fixation. Dans ce cas, lé câble ou le tube rentre dans le boîtier. Celui-ci est placé en extrémité. La connectique permet l'éclatement du câble.

L'ancrage assure la liaison entre le boîtier et la gaine. Il est possible d'associer deux boîtiers côte à côte et dans ce cas le câble est ancré dans une pièce interface P.

Une configuration en demi-cercle des embases permet un élargissement de l'éventail favorable à la préhension des connecteurs. Ceux-ci sont mis en extrémité de cordons jarretières destinés au raccordement terminal.

L'éclatement du câble peut être réalisé sur deux boîtiers. Dans cette configuration un des deux boîtiers est traité en "miroir".

La pièce interface (P) assure la protection et la sortie du câble à la sortie de l'ancrage. Grâce à cet assemblage ou variante d'utilisation on augmente le nombre de connecteurs du boîtier.

Néanmoins, il est possible d'utiliser celui-ci avec empilage des connecteurs afin de doubler le nombre de connecteurs Cette variante à deux ou plusieurs étages de connecteurs est représentée sur la figure 5.

On peut remarquer que la surface de lovage ne change pas. Le boîtier a les mêmes caractéristiques avec 8 ou 16 connecteurs.

Cette spécificité est exploitable dans les baies d'équipements et peut remplacer avantageusement des tiroirs optiques par exemple dans les équipements du brassage ou de répartition.

La présente invention permet de gérer l'extrémité de câble et les fibres optiques munies de leur connecteur. Le boîtier proposé peut être considéré comme une prise mobile optique à l'instar d'une prise électrique.

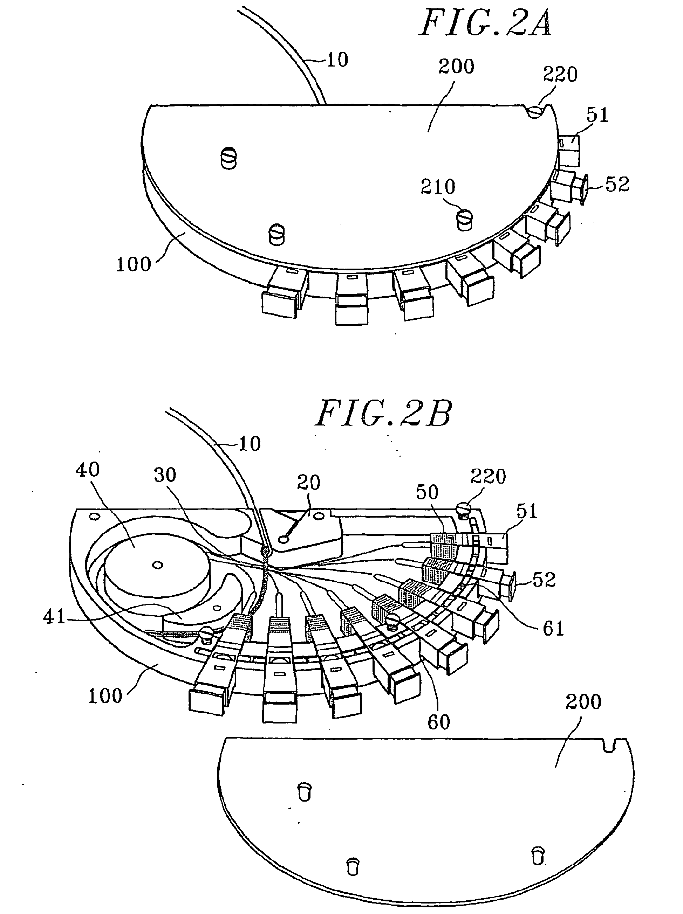

Les figures 2A et 2B illustrent le boîtier selon l'invention dans un mode de réalisation correspondant à son expression la plus simple. Il permet le traitement d'une extrémité de câble (8 fibres par exemple).

Il comporte un fond 100 peu profond et un couvercle 200 détachable pour recouvrir de manière hermétique le fond 100.

Le câble de fibres optiques 10 arrive dans une zone d'ancrage 20 du boîtier. L'extrémité du câble 10 est dénudée pour laisser une longueur suffisante aux modules de fibres optiques 30. Ces modules 30 de fibres optiques sont lovés dans la zone de lovage 40, 41 agencée dans le fond 100 du boîtier. Les extrémités des fibres sont raccordées chacune à un connecteur 50. Chaque connecteur est raccordé à une embase 51. Les embases 51 sont réparties dans le fond 100 du boîtier et bloquées individuellement dans des cavités 60 aménagées à cet effet, autobloquantes grâce à une rainure 61.

Lorsque les connexions sont réalisées le boiter peut être refermé (figure 1A). Le couvercle 200 est fixé au fond 100 par exemple par un ensemble de vis 210.

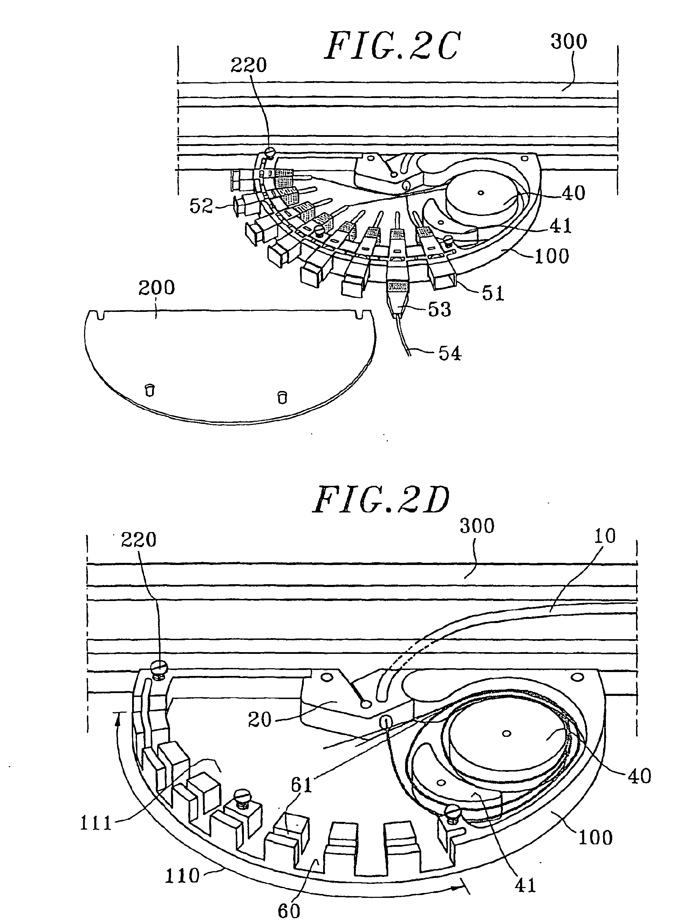

Les figures 2C et 2D permettent d'illustrer l'implantation de boîtier le long d'une goulotte 300 de passage de câbles. Le boîtier peut être fixé au moyen de deux vis 220 le long de la goulotte 300. Le câble 10 est ancré dans la zone d'ancrage 20.

La figure 2C illustre la connexion d'un câble avec 8 fibres optiques de 250µm avec les connecteurs internes 50 en extrémité des fibres raccordées aux embases 51 et des bouchons 52 sur les extrémités des embases en attente de raccord. On a illustré également un raccord 53 à une jarretière 54 (ou câble monofibre).

La figure 2D permet d'illustrer le fond 100 du boîtier muni d'une zone de lovage 40, 41 d'une zone d'ancrage 10, d'une zone de répartition des connecteurs 111 et de blocage des embases 110. Cette zone 110 correspond à une bordure du boîtier et comporte une série de cavités 60 aménagées dans l'épaisseur de cette bordure. Le câble 10 ancré dans le boîtier est dans cet exemple un câble avec fibres revêtues de diamètre 900µm.

Les figures 2A 2B et 2C, 2D permettent d'illustrer une variante d'exécution dans la réalisation du boîtier consistant à avoir une zone de lovage à gauche et les connecteurs à droite (figures 2A, 2B) ou l'inverse (figures 2C, 2D). Cette variante permet une adaptation de l'implantation sur site.

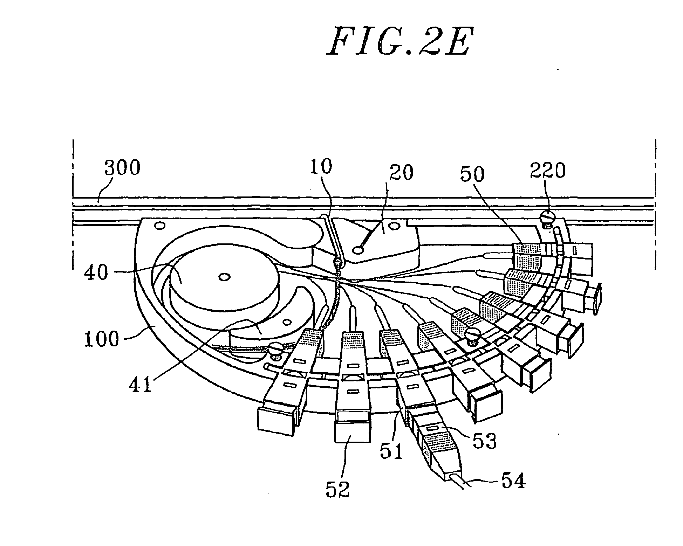

La figure 2E, illustre un câble protégé dans une goulotte ancré dès sa sortie, le lovage des surlongueurs de fibres, l'organisation en éventail des sorties, la fixation des embases sans vis ni clip, l'organisation externe des sorties et du raccordement qui est dans un plan unique et la mise en place d'un connecteur en externe sans risque pour le câblage interne, même couvercle ouvert.

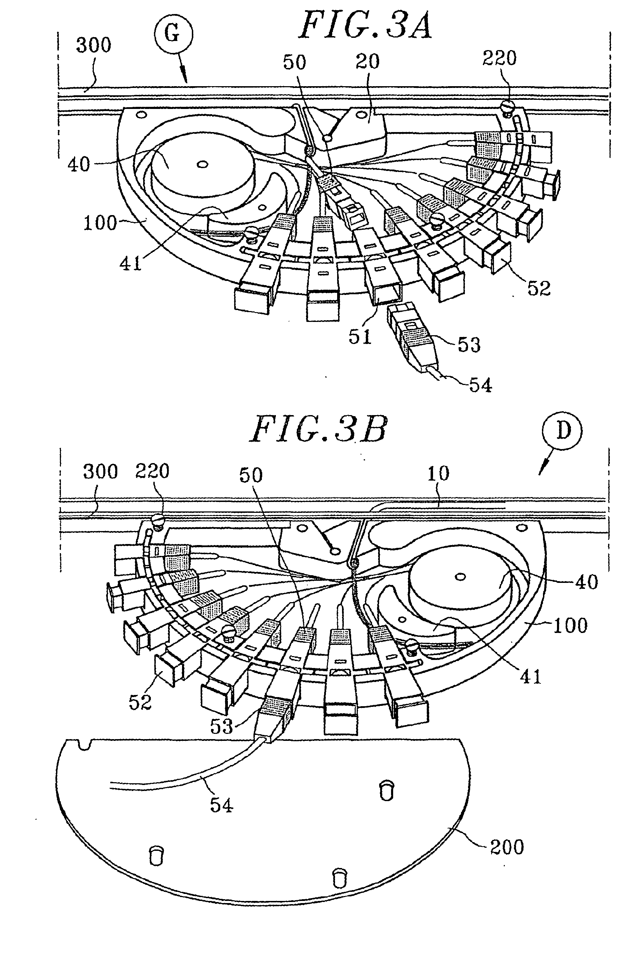

Les figures 3A et 3B, permettent d'illustrer le raccordement dans le cas d'un boîtier exploité sur un câble en passage avec piquage d'un module 11 de 8 fibres optiques du câble. Sur la figure 3A, la zone de lovage est à gauche, le boîtier est dit « gauche G ».

Cette vue permet d'illustrer également un connecteur interne 50 déconnecté de son embase 51.

La figure 3B, illustre un boîtier dit « droit D ». Une jarretière 5 est raccordée à une embase 51 du boîtier pour le raccordement d'un équipement du site.

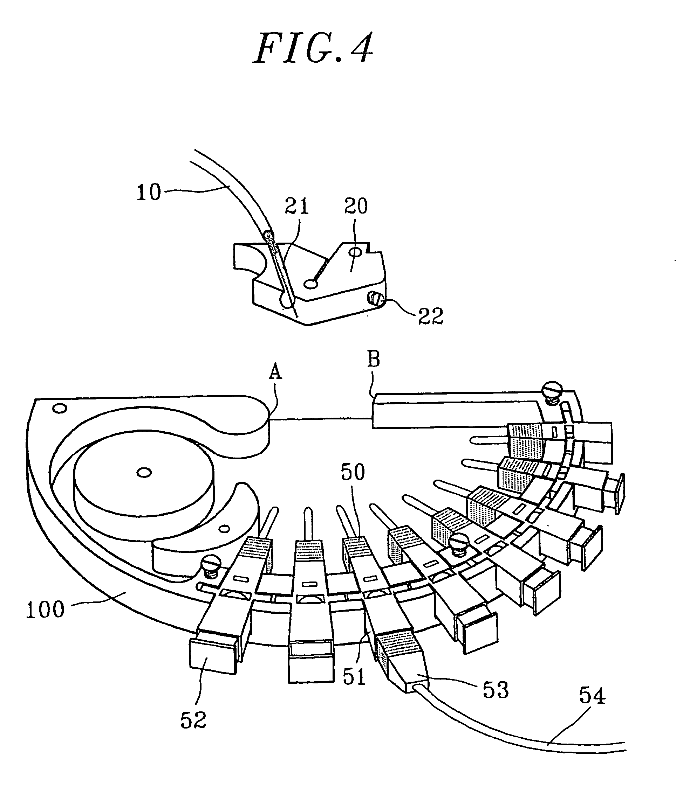

La figure 4, permet d'illustrer la mise en place de l'extrémité d'un câble et son ancrage dans le boîtier. Comme on peut le voir sur cette figure la zone d'ancrage 20 est constituée d'une pièce indépendante pouvant être retirée du boîtier afin de positionner le câble facilement. Cette pièce 20 a la même épaisseur que l'épaisseur du boîtier et a une forme qui lui permet d'être mise en place en continuité de la bordure du boîtier entre deux extrémités A,B interrompues de cette bordure.

Cette zone 20 comporte une gorge 21 déformable sous l'action d'une vis 22, destinée à recevoir l'extrémité du câble 10. La zone d'ancrage 20 est mise en place comme l'illustre la figure 4 entre les deux bords A et B.

La figure 5, illustre une variante d'exécution dans la réalisation du boîtier. Dans cette variante il est prévu deux rangs superposés de connexions. A cette fin le boîtier aura un fond plus épais que ceux qui ont été illustrés sur les figures précédentes dans la mesure bien sûr où les connecteurs et embases utilisés sont les mêmes que précédemment. La bordure correspondant à la zone 110 de répartition et de calage des embases comporte des cavités aptes à recevoir chacune deux embases superposées. Le boîtier illustré sur cette figure est prévu pour 16 connexions, réalisable à partir de deux étages de 8 connecteurs.

La figure 6, illustre une autre mode de réalisation. Dans ce mode les capacités de connexion sont également doublées, mais de façon différente de celle qui est illustrée sur la figure 5. En effet, dans cet exemple le doublement se fait sur un même niveau (même plan) en montant deux boîtiers en miroir (un boîtier gauche G et un boîtier droite D).

Les figures 7A et 7B, illustrent un boîtier monté en miroir avec deux boîtiers l'un de type gauche G et l'autre de type droite D dans une variante d'exécution.

Dans cette variante les deux boîtiers sont fixés sur un socle commun 30 (une plaque) et les deux pièces d'ancrage des câbles sont fixées sur ce socle entre les deux fonds de boîtiers.

La figure 7A, permet d'illustre le détail de l'organisation du câble sur les deux boîtiers.

La figure 7B, permet d'illustrer le détail de l'ancrage du câble 10 qui est rapporté sur la plaque 30. Le deuxième ancrage est utilisé pour tenir le porteur central 12 du câble.

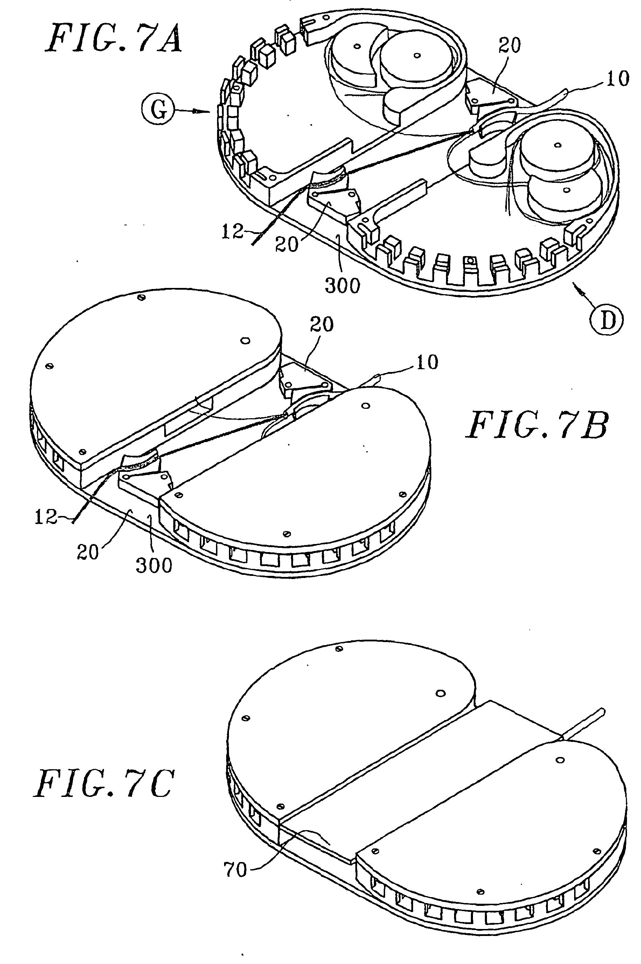

La figure 7C, illustre le boîtier après mise en place d'une plaque 70 de protection des ancrages.

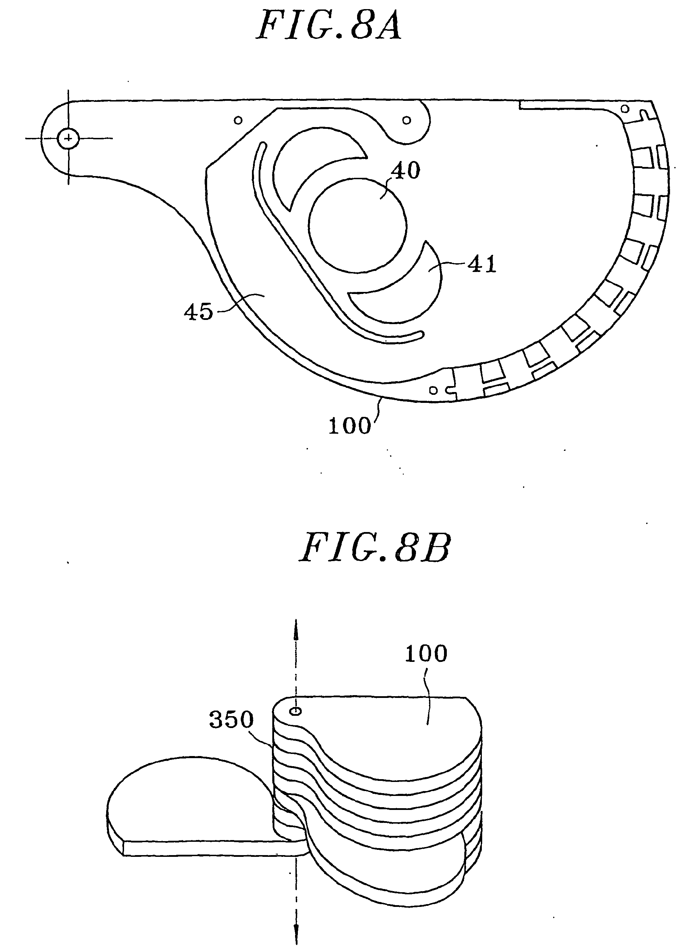

La figure 8A représente un schéma d'un boîtier correspondant à une variante de réalisation illustrant une zone de logement des épissures 45.

Ce boîtier illustre également un mode de réalisation adapté aux équipements de brassage ou de répartition. En effet, le boîtier comporte une articulation 350 permettant un montage par empilement autour d'un axe de pivotement comme l'illustre la figure 8B.

Ainsi, comme cela vient d'être décrit et illustré par les exemples précédents, avantageusement le boîtier est de forme demi-ronde et a une épaisseur interne qui correspond sensiblement à une embase de connecteur (ou deux). Il possède un fond qui permet de recevoir l'extrémité d'un câble avec ses fibres et les connecteurs dans un même plan. Le couvercle est amovible et a la même surface et la même forme que le boîtier.

Sur un secteur de 90° placé à droite, ou dans une variante à gauche, des sorties de connecteurs sont accessibles de l'intérieur ou de l'extérieur par l'utilisation d'embases normalisées implantées dans le secteur. Ces embases sont positionnées dans des cavités. Les cavités sont de formes caractéristiques pour envelopper la partie centrale de l'embase ce qui permet de supporter tous les efforts de tirage ou de compression; l'embase est donc prisonnière de la paroi.

La mise en place de l'embase se fait dans la cavité sans outil et autre moyen de fixation. Ces cavités sont placées sur des axes rayonnants dont le centre est celui du boîtier. Ils sont au nombre de huit dans l'exemple réalisé, cependant il est possible, comme cela a été décrit, de réaliser un boîtier de plus grande contenance en connecteurs en augmentant par exemple la profondeur des cavités pour doubler le nombre d'embases. Pour recevoir un nombre supérieur d'embases, il est également possible d'augmenter le périmètre du boîtier ou de connecter deux boîtiers en miroir.

Dans le cas d'un boîtier à 2 ou 3 connecteurs, les cavités non utilisées peuvent être bouchées car il n'est pas possible de réaliser une homothétie de la surface, celle-ci n'est pas liée au nombre de connecteurs mais à la surface de lovage qui respecte les spécificités des fibres optiques.

Côté opposé aux connecteurs, un lovage des fibres permet de gérer la surlongueur de fibre nécessaire aux raccordements. Cette gestion se réalise par un espace décrit autour d'un cylindre et d'un élément en forme de croissant. Afin de conditionner les fibres, des languettes ou masques souples placées sur la partie supérieure du cylindre et du croissant maintiennent les fibres sans contraintes.

Ce boîtier pour connecteurs optiques a une forme caractéristique en demi-cercle avec un plan linéaire situé sensiblement dans l'axe du cercle. Ce plan sert à la fixation le long de la goulotte ou conduite.

Dans la partie médiane de ce plan un passage de câble ou de fibre permet l'entrée dans le boîtier. Une forme arrondie permet d'éviter les contraintes sur les fibres en particulier lors de l'entrée de fibres nues.

En continuité de ce passage, un dispositif d'ancrage permet de solidariser l'extrémité d'un câble, d'un tube ou d'un élément de la structure du câble avec le boîtier. Le but est d'assurer une fixation sur ces extrémités du câble ou sur les porteurs pour amarrer le câble avec le boîtier. Cet ancrage épouse la forme d'entrée du boîtier; il est fixé en fond par une vis. Cet ancrage est adapté à la diversité des gaines ou des tubes qui sont placés dans une cavité ronde. Celle-ci est déformable et coopère avec la forme arrondie du boîtier afin d'éviter toute pliure du câble.

Le serrage des gaines et enveloppes est assuré par un élément déformable. Il y a pincement de la gaine. Dans le cas de serrage d'éléments de gaines ou de porteurs, les fibres en passage sont protégées dans l'ancrage par une conduite. Cet ancrage assure la fixation de tous les câbles de l'état de l'art par des éléments rapportés dans la cavité.

L'invention porte donc sur un boîtier de forme caractéristique qui assure des fonctions de connexion d'extrémités de fibres issues d'un câble ou d'un module dérivé. A ce jour, il existe divers réseaux arborescents et en boucle. L'essai de prototypes a permis d'identifier des situations ou configurations qui sont prises en compte par l'invention dans le résultat. En particulier, la sortie favorisée des prises sur un côté et le long du mur est possible dans un local ce qui simplifie la pose.

En effet une variante est obtenue en réalisant un boîtier en miroir; il a des sorties à gauche et à droite.

La forme, la dimension et les fonctions sont identiques au boîtier de base et cette présentation en miroir permet comme on l'a vu d'avoir des sorties de câbles du côté opposé au précédent.

Ces boîtiers peuvent être adaptés indifféremment, suivant l'environnement d'immeuble, sur un réseau en boucle sécurisée ou sécurisable ou sur une extrémité de câbles accessible dans le même bureau.

Le boîtier de gauche ou de droite traite le raccordement par la gestion des fibres et le maintien en position des embases de connecteurs. Il permet le raccordement du connecteur sur fibre nue et assure la protection de l'ensemble raccordé. De plus, l'accès à toutes ces fonctions se fait par un retrait de couvercle indépendant des connecteurs ce qui facilite la réintervention. Le couvercle peut intégrer tout marquage et ne supporte aucune autre fonction.

Le montage d'un boîtier est facilité et le câblage ne nécessite pas de formation particulière.

L'invention porte également sur un procédé de câblage d'immeubles pour le raccordement de postes de travail.

On va maintenant décrire l'utilisation de tels boîtiers à travers un procédé de câblage d'immeuble avec trois types de raccordement d'un poste de travail.

### a) Le raccordement sur un câble arborescent C1.

Le boîtier selon l'invention est appliqué dans cette illustration à un câblage de l'état de l'art. Un câble assure les liens entre le local technique LT1 et la prise. Il y a autant de câbles que de prises ce qui a comme résultat en encombrement de la partie amont. Cette solution impose un investissement dans un très grand nombre de câbles et d'en assurer la pose.

On a présenté le câblage par pose de mini tubes.

On considère ce dernier câblage en analogie à la pose d'un câble traditionnel, aussi, le boîtier précédemment décrit satisfait au câblage de l'état de l'art. Il peut être mis en lieu et place des produits industriels existants avec cependant les nouveaux avantages décrits précédemment.

Enfin, le câblage hors goulotte par un boîtier solidaire d'une extrémité de câble peut être classé dans le cas C1.

### b)Le raccordement sur un câble arborescent doublé C2.

La sécurisation est prévue par la présente invention afin d'assurer une prospective avantageuse. La configuration du boîtier permet un raccordement sécurisé du poste de travail. En effet, un autre câble issu du local LT2 par exemple, alimente une deuxième prise située à proximité de la première.

L'exploitation des prises mises en vis-à-vis permet d'assurer la sécurisation puisqu'il est possible de se raccorder sur une prise ou sur une autre.

Le local, le poste de travail ou l'équipement est raccordé à deux câbles ayant des parcours différents et issus de raccordement de type classe 1 et classe 2.

Le boîtier satisfait à ce câblage en double arborescence et il n'est pas nécessaire d'apporter de modification pour permettre ce câblage.

Ce dernier peut être envisagé à posteriori. En effet, un premier câblage du type C1 peut être déjà réalisé et un nouveau câblage opposé C2 peut être envisagé pour assurer la sécurisation.

Dans un immeuble toutes les prises ne sont pas sécurisables, mais par la pose de nouveaux câbles, certaines prises peuvent être sécurisées.

A l'identique du cas C1, l'utilisation d'un boîtier sur une extrémité de câble nomade peut satisfaire à la double arborescence du câblage de l'immeuble.

### c) Le raccordement par piquage ou accès à la fibre sur câble passant CP.

Le cas C1 et C2 sont des procédés de câblage connus en soi et coûteux. C3 n'est pas envisagé à ce jour, mais il est abordé de plus en plus par les opérateurs ou les décideurs d'opérations de câblage en immeuble.

On va décrire un procédé optimisé de câblage en immeuble de poste de travail qui tient compte de l'incontournable réduction de coûts et de l'alternative de sécurisation souhaitée.

La technique d'accès aux fibres sur câble passant déployé en immeuble ou campus permet de raccorder deux boîtiers (prises) situées près d'un poste de travail. Cette technique facilite un procédé de câblage d'immeuble grâce à l'utilisation du boîtier, objet de l'invention.

La prospective d'un câblage en boucle avec le piquage est une réponse économique à un câblage optimisé. En effet, un seul câble parcourt l'immeuble ou le campus (le coût d'un câble de grande contenance ramené à la fibre est deux fois moins cher que n câbles miniatures).

Une seule pose est à envisager. Ce câble parcourt les divers locaux dans lesquels les postes de travail sont à raccorder. On a vu qu'il était possible d'extraire des fibres sur un câble tendu en immeuble et de raccorder des boîtiers conforme à l'invention². L'étanchéité du câble après ouverture n'est pas une contrainte, la protection est réalisée dans la goulotte.

Les seuls pions bloquants sont le choix du câble et la maîtrise du piquage.

## Revendications

1. Boîtier de raccordement de fibres optiques en immeubles comprenant au moins un fond, ledit fond (100) comprenant au moins une protubérance cylindrique (40) et une protubérance en demi-lune (41), toutes deux aptes à recevoir au moins un tube (10) ou un ensemble formé par l'extrémité d'un câble de fibres optiques (30) ou de modules de fibres optiques avec leurs connecteurs (50), **caractérisé en ce que** ledit boîtier comprend en outre des embases (51) montés sur ledit fond (100) pour recevoir les connecteurs, chacun des éléments de cet ensemble reposant sur le fond du boîtier.

2. Boîtier de raccordement de fibres optiques selon la revendication précédente, **caractérisé en ce que** le fond (100) comprend une zone d'ancrage (20) d'un câble de fibres optiques, une zone de lovage (40,41), une zone de connectique interne (111), une zone de réception des embases des connecteurs (110).

3. Boîtier de raccordement de fibres optiques selon la revendication 2, **caractérisé en ce que** la zone de réception des embases est constituée par une bordure avant du boîtier, ladite bordure (110) comprenant des logements ayant une forme de créneaux alignés, chaque créneau étant apte à recevoir une ou plusieurs embases (51) superposées de connecteurs.

4. Boîtier de raccordement de fibres optiques selon la revendication 2, **caractérisé en ce que** la zone d'ancrage (20) d'un câble à fibres optique comprend une pièce amovible comprenant une rainure (21) pour le passage du câble et ayant une forme adaptée de manière à être encastrée dans une ouverture pratiquée dans la bordure du boîtier opposée à celle qui comporte les logements pour les embases des connecteurs.

5. Boîtier de raccordement de fibres optiques selon la revendication 4, **caractérisé en ce que** la pièce amovible d'ancrage (20) est déformable.

6. Boîtier de raccordement de fibres optiques selon l'une quelconque des revendications précédentes, **caractérisé en ce qu'**il comprend une zone pour épissures (45).

7. Boîtier de raccordement de fibres optiques selon l'une quelconque des revendications précédentes, **caractérisé en ce qu'**il comporte deux fonds plats rattachés l'un à l'autre et surmontés chacun de leur couvercle

8. Boîtier de raccordement de fibres optiques selon la revendication 7, **caractérisé en ce que** les deux fonds plats sont rattachés par une plaque support commune.

9. Boîtier de raccordement de fibres optiques selon l'une quelconque des revendications précédentes, **caractérisé en ce que** le fond à une épaisseur procurant un espace pour deux ensembles chacun comprenant l'extrémité d'un câble de fibres optiques ou d'un module de fibres optiques, les fibres, leurs connecteurs, et les embases pour ces connecteurs ; ces deux ensembles étant superposés.

10. Boîtier de raccordement de fibres optiques selon l'une quelconque des revendications 1 à 6, **caractérisé en ce qu'**il comporte une articulation (350) lui permettant de pivoter autour d'un axe d'empilement de boîtiers.

11. Procédé de câblage d'immeubles pour le raccordement de postes de travail, **caractérisé en ce qu'**il consiste à raccorder un câble de fibres optiques arrivant dans un immeuble pour desservir des postes de travail installés à proximité du passage du câble, à un ou plusieurs boîtiers selon l'une quelconque des revendications précédentes.

12. Procédé de câblage d'immeubles selon la revendication 11, **caractérisé en ce qu'**il consiste à raccorder l'extrémité de chaque câble d'un ensemble de câbles arborescents de l'immeuble à un boîtier.

13. Procédé de câblage d'immeubles selon la revendication 11, **caractérisé en ce qu'**il consiste à raccorder l'extrémité de chaque câble d'un deuxième ensemble de câbles arborescents de l'immeuble destiné à doubler le premier ensemble à un boîtier à proximité du boîtier correspondant du premier ensemble.

14. Procédé de câblage d'immeubles selon la revendication 11, **caractérisé en ce qu'**il consiste à faire circuler un câble dans un immeuble et à raccorder des modules de fibres optiques de ce câble par piquage à des boîtiers de raccordement pour desservir des postes de travail distincts.

## Claims

1. Unit for connecting optical fibres in buildings comprising at least one bottom, said bottom (100) comprising at least one cylindrical protuberance (40) and one half-moon protuberance (41), both designed to receive at least one tube (10) or an assembly formed by the end of an optical fibres cable (30) or optical fibre modules with their connectors (50), **characterized in that** said unit also includes sockets (51) mounted on said bottom (100) to receive the connectors, each element of this assembly resting on the bottom of the unit.

2. Unit for connecting optical fibres according to the preceding claim, **characterized in that** the bottom (100) includes an anchoring area (20) for an optical fibres cable, a coilling area (40, 41), an internal connector area (111), an area (110) for receiving connector sockets.

3. Unit for connecting optical fibres according to Claim 2, **characterized in that** the area for receiving sockets is formed by a front edge of the unit, said edge (110) including recesses in the form of aligned teeth, each tooth being designed to receive one or more stacked connector sockets (51).

4. Unit for connecting optical fibres according to Claim 2, **characterized in that** the anchoring area (20) for an optical fibres cable comprises a removable part including a groove (21) for the cable to pass through and having a shape designed to fit into an opening provided in the edge of the unit opposite to that which includes the recesses for the connector sockets.

5. Unit for connecting optical fibres according to Claim 4, **characterized in that** the removable anchoring part (20) is deformable.

6. Unit for connecting optical fibres according to any one of the preceding claims, **characterized in that** it includes an area for splices (45).

7. Unit for connecting optical fibres according to any one of the preceding claims, **characterized in that** it comprises two flat bottoms attached to each other and each topped by its respective lid.

8. Unit for connecting optical fibres according to Claim 7, **characterized in that** the two flat bottoms are attached by a common support plate.

9. Unit for connecting optical fibres according to any one of the preceding claims, **characterized in that** the bottom has a thickness providing a space for two assemblies each comprising the end of an optical fibres cable or an optical fibre module, the fibres, their connectors, and the sockets for these connectors; these two assemblies being stacked.

10. Unit for connecting optical fibres according to any one of Claims 1 to 6, **characterized in that** it includes a hinge part (350) enabling it to swivel about a unit stacking spindle.

11. Method of wiring buildings for the connection of workstations, **characterized in that** it consists in connecting an optical fibres cable arriving in a building to serve workstations installed near to the cable run, to one or more units according to any one of the preceding claims.

12. Method of wiring buildings according to Claim 11, **characterized in that** it consists in connecting the end of each cable of a set of hierarchically-organized cables in the building to a unit.

13. Method of wiring buildings according to Claim 11, **characterized in that** it consists in connecting the end of each cable of a second set of hierarchically-organized cables in the building intended to duplicate the first set, to a unit near to the corresponding unit of the first set.

14. Method of wiring buildings according to Claim 11, **characterized in that** it consists in running a cable in a building and in connecting optical fibre modules of this cable by tapping into connection units for serving separate workstations.

## Patentansprüche

1. Anschlussgehäuse für Lichtleitfasern in Gebäuden, das mindestens einen Boden aufweist, wobei der Boden (100) mindestens eine zylindrische (40) Vorragung und eine halbmondförmige (41) Vorragung aufweist, die ausgelegt sind, um mindestens ein Rohr (10) oder eine aus dem Ende eines Lichtleitfaserkabels (30) oder aus Modulen von Lichtleitfasern mit ihren Verbindern (50) bestehende Einheit aufzunehmen, **dadurch gekennzeichnet, dass** das Gehäuse außerdem am Boden (100) befestigte Sockel (51) zur Aufnahme der Verbinder aufweist, wobei jedes der Elemente dieser Einheit auf dem Boden des Gehäuses ruht.

2. Anschlussgehäuse für Lichtleitfasern nach dem vorhergehenden Anspruch, **dadurch gekennzeichnet, dass** der Boden (100) eine Verankerungszone (20) für ein Lichtleitfaserkabel, eine Einrollungzone (40, 41), eine innere Anschlusszone (111), eine Aufnahmezone für die Sockel der Verbinder (110) aufweist.

3. Anschlussgehäuse für Lichtleitfasern nach Anspruch 2, **dadurch gekennzeichnet, dass** die Aufnahmezone für die Sockel aus einer vorderen Randleiste des Gehäuses besteht, wobei die Randleiste (110) Aufnahmen in Form von fluchtend angeordneten Zähnen hat, wobei jede Zähn in der Lage ist, einen oder mehrere übereinander liegende Sockel (51) von Verbindern aufzunehmen.

4. Anschlussgehäuse für Lichtleitfasern nach Anspruch 2, **dadurch gekennzeichnet, dass** die Verankerungszone (20) eines Lichtleitfaserkabels ein lösbares Bauteil enthält, das eine Rille (21) für den Durchgang des Kabels aufweist und eine geeignete Form hat, um in eine Öffnung in der Randleiste des Gehäuses entgegengesetzt zu derjenigen eingefügt zu werden, die die Aufnahmen für die Sockel der Verbinder aufweist.

5. Anschlussgehäuse für Lichtleitfasern nach Anspruch 4, **dadurch gekennzeichnet, dass** das lösbare Verankerungsteil (20) verformbar ist.

6. Anschlussgehäuse für Lichtleitfasern nach einem der vorhergehenden Ansprüche, **dadurch gekennzeichnet, dass** es eine Zone für Spleißverbindungen (45) aufweist.

7. Anschlussgehäuse für Lichtleitfasern nach einem der vorhergehenden Ansprüche, **dadurch gekennzeichnet, dass** es zwei flache Böden aufweist, die aneinander befestigt sind und über denen je ihr Deckel sitzt.

8. Anschlussgehäuse für Lichtleitfasern nach Anspruch 7, **dadurch gekennzeichnet, dass** die beiden flachen Böden über eine gemeinsame Trägerplatte befestigt sind.

9. Anschlussgehäuse für Lichtleitfasern nach einem der vorhergehenden Ansprüche, **dadurch gekennzeichnet, dass** der Boden eine Dicke hat, die einen Raum für zwei Einheiten schafft, die je das Ende eines Lichtleitfaserkabels oder eines Lichtleitfasermoduls, die Fasern, ihre Verbinder und die Sockel für diese Verbinder enthalten, wobei diese beiden Einheit übereinander liegen.

10. Anschlussgehäuse für Lichtleitfasern nach einem der Ansprüche 1 bis 6, **dadurch gekennzeichnet, dass** es ein Gelenk (350) aufweist, das es ihm ermöglicht, um eine Stapelachse von Gehäusen zu schwenken.

11. Verfahren zur Gebäudeverkabelung für den Anschluss von Arbeitsplätzen, **dadurch gekennzeichnet, dass** es darin besteht, ein Lichtleitfaserkabel, das in einem Gebäude ankommt, um Arbeitsplätze zu versorgen, die in der Nähe des Kabeldurchgangs installiert sind, an ein oder mehrere Gehäuse gemäß einem der vorhergehenden Ansprüche anzuschließen.

12. Verfahren zur Gebäudeverkabelung nach Anspruch 11, **dadurch gekennzeichnet, dass** es darin besteht, das Ende jedes Kabels einer Einheit von verzweigten Kabeln des Gebäudes an ein Gehäuse anzuschließen.

13. Verfahren zur Gebäudeverkabelung nach Anspruch 11, **dadurch gekennzeichnet, dass** es darin besteht, das Ende jedes Kabels einer zweiten Einheit von verzweigten Kabeln des Gebäudes, die dazu bestimmt ist, die erste Einheit zu doppeln, an ein Gehäuse in der Nähe des entsprechenden Gehäuses der ersten Einheit anzuschließen.

14. Verfahren zur Gebäudeverkabelung nach Anspruch 11, **dadurch gekennzeichnet, dass** es darin besteht, ein Kabel in einem Gebäude zu verlegen und Lichtleitfasermodule dieses Kabels durch Abzweigung an Anschlussgehäuse anzuschließen, um unterschiedliche Arbeitsplätze zu versorgen.
